# EUROPEAN PATENT SPECIFICATION

(11) **EP 4 432 712 B1**
(45) Date of publication and mention of the grant of the patent: **18.02.2026**
(21) Application number: 23162372.9
(22) Date of filing: 16.03.2023
(51) Int. Cl.: H04W 12/06, H04W 12/08, H04W 12/069, H04W 12/40, H04L 9/40, H04L 9/32

(54) **METHOD FOR AUTHENTICATING A GENERAL OR NON-PRIVILEGED APPLICATION THAT IS RUNNING ON OR IS EXECUTED BY A USER EQUIPMENT, USER EQUIPMENT, SYSTEM OR TELECOMMUNICATIONS NETWORK, ENTITLEMENT CONFIGURATION SERVER ENTITY, PROGRAM AND COMPUTER-READABLE MEDIUM**
VERFAHREN ZUR AUTHENTIFIZIERUNG EINER ALLGEMEINEN ODER NICHTPRIVILEGIERTEN ANWENDUNG AUF ODER AUSGEFÜHRT VON EINEM BENUTZERGERÄT, BENUTZERGERÄT ODER TELEKOMMUNIKATIONSNETZWERK
PROCÉDÉ D'AUTHENTIFICATION D'UNE APPLICATION GÉNÉRALE OU NON PRIVILÉGIÉE EXÉCUTÉE OU EXÉCUTÉE PAR UN ÉQUIPEMENT UTILISATEUR

(43) Date of publication of application: 18.09.2024
(73) Proprietor: Deutsche Telekom AG, 53113 Bonn (DE)
(72) Inventor: SCHMITT, Florian-Leon, 53227 Bonn (DE); STEINKE, Daniel, 51067 Köln (DE)
(74) Representative: Schwöbel, Thilo K.

(56) References cited:
- CN-A- 110 858 968
- US-A1- 2017 323 116
- US-A1- 2022 030 423

## Description

### BACKGROUND

The present invention relates a method for authenticating a general or non-privileged application that is running on or is executed by a user equipment, wherein the user equipment is used with a telecommunications network, wherein the telecommunications network comprises an entitlement configuration server entity and wherein the telecommunications network comprises or is associated with or is able to access a resource server entity, wherein the user equipment comprises a universal integrated circuit card entity as well as runs or executes an operating system, and wherein the universal integrated circuit card entity provides security procedures.

Additionally, the present invention relates to a user equipment for authenticating a general or non-privileged application that is running on or executed by the user equipment, wherein the user equipment is used with a telecommunications network, wherein the telecommunications network comprises an entitlement configuration server entity and wherein the telecommunications network comprises or is associated with or is able to access a resource server entity, wherein the user equipment comprises a universal integrated circuit card entity as well as runs or executes an operating system, and wherein the universal integrated circuit card entity provides security procedures.

Furthermore, the present invention relates to a system or to a telecommunications network or to a resource server entity for authenticating a general or non-privileged application that is running on or executed by a user equipment, wherein the user equipment is used with the telecommunications network, wherein the telecommunications network comprises an entitlement configuration server entity and wherein the telecommunications network comprises or is associated with or is able to access the resource server entity.

Still additionally, the present invention relates to an entitlement configuration server entity provided to be used as part of an inventive system or as part of an inventive telecommunications network.

Furthermore, the present invention relates to a program and to a computer-readable medium for authenticating a general or non-privileged application that is running on or is executed by a user equipment.

The present invention generally relates to the area of authenticating when using a user equipment is used with a telecommunications network. Whenever a user equipment or mobile device or a user thereof needs to sign into a service provided by an application server entity or an application running on the user equipment or mobile device, there is typically a need for an authentication procedure, often using an app-specific authentication mechanism; in many cases, this is done using a username and a password or other pieces of credential information.

Furthermore, telecommunications network operators, especially mobile network operators, authenticate their users to access the mobile networks and use their services by means of using the authentication of the subscriber identity module card (SIM card); often a standard procedure is used, using an extensible authentication protocol and/or an authentication and key agreement, EAP_AKA.

Hence, it is conventionally known to identify - using the EAP_AKA mechanism - the subscriber identity module card in a mobile device or user equipment; however, the access to the EAP_AKA mechanisms and tokens on such a device is very tightly restricted by the operating system. Document CN110858968 discloses a method where a third-part application on a communication device accesses a third-party application server by utilizing a user token obtained after the authentication of the SIM card, of the communication device, towards the mobile network.

### SUMMARY

An object of the present invention is to provide an effective and comparatively simple solution for authenticating a general or non-privileged application that is running on or is executed by a user equipment. A further object of the present invention is to provide a corresponding user equipment, a corresponding system or a corresponding mobile communication network or a corresponding resource server entity, or a corresponding entitlement configuration server entity, and a corresponding program and computer-readable medium. The invention is defined in the appended claims.

The object of the present invention is achieved by a method for authenticating a general or non-privileged application that is running on or is executed by a user equipment, wherein the user equipment is used with a telecommunications network, wherein the telecommunications network comprises an entitlement configuration server entity and wherein the telecommunications network comprises or is associated with or is able to access a resource server entity,
wherein the user equipment comprises a universal integrated circuit card entity as well as runs or executes an operating system, wherein the universal integrated circuit card entity provides security procedures, and wherein the user equipment comprises a privileged application or functionality that is able to access the security procedures of the universal integrated circuit card entity,
wherein, in order to authenticate the general or non-privileged application towards the resource server entity, the method comprises the following steps:
   -- in a first step, the user equipment performs or conducts an extensible authentication protocol, EAP, and/or an enhanced authentication and key agreement, AKA, with respect to, or towards, the entitlement configuration server entity, resulting in the privileged application or functionality receiving or comprising a first token information,
   -- in a second step, the user equipment requests, from the entitlement configuration server entity, a second token information, resulting in the second token information being received by the user equipment, the second token information being based on the first token information and provided to the general or non-privileged application,
   -- in a third step, the general or non-privileged application uses the second token information to authenticate itself at, or towards, the resource server entity.

It is thereby advantageously possible, according to the present invention, to provide for an application and/or user authentication, especially based on TS43 EAP_AKA. Especially, it is advantageously possible, according to the present invention, to use the security procedures that are provided by the universal integrated circuit card entity for an authentication of a general or non-privileged application (or for an authentication of a user thereof) that the user equipment is running (typically on, or as part of, the operating system of the user equipment). Hence, the trust established between, on the one hand, the device or user equipment (especially between the universal integrated circuit card entity of such device or user equipment), and, on the other hand, the network is advantageously able to be used also by general or non-privileged applications or apps.

Thereby, it is especially advantageously possible, according at least to a variant or an embodiment of the present invention, that the access to a main authentication token remains very much restricted, wherein nevertheless the mentioned trust relationship between the user equipment (or its universal integrated circuit card entity) and the telecommunications network is used in order authenticate a general or non-privileged application and/or its user.

It is thereby furthermore advantageously possible to enhance the security level of such general or non-privileged applications (and, especially, enhance the security level of using such general or non-privileged applications) compared to authentication mechanisms such as only using user credentials to be input or provided by the user of such a general or non-privileged application, e.g., username and a password.

By means of using, according to the present invention, the security procedures provided by the universal integrated circuit card entity for authentication purposes of the general or non-privileged application, it is advantageously possible to provide - also regarding such general or non-privileged applications - the security level, or at least a comparable security level, that is realized when an operator of a network, especially a mobile network operator, authenticates a user in case this user is attempting to access the telecommunications network and to use its services, using the universal integrated circuit card entity and procedures based on TS43 EAP_AKA, i.e. using the extensible authentication protocol, EAP, and/or an enhanced authentication and key agreement, AKA.

In conventionally known telecommunications networks, for many services like eSIM provisioning and phone number verification, an entitlement server, ES, or entitlement configuration server entity is used. The entitlement configuration server entity is typically hosted by the network operator and interfaces many of the operators systems, such as business support systems, BSS, as well as the mobile devices or user equipments. The use cases and the interface between mobile devices or user equipments and the entitlement configuration server entity is defined in GSMA TS.43. TS.43 also uses EAP_AKA in many use cases to identify the SIM card, or universal integrated circuit card entity, in the mobile device or user equipment.

As the entitlement configuration server entity interfaces with many business support systems, it can use the authenticated SIM card (or universal integrated circuit card entity) to get more information on the user from other systems, typically as part of the telecommunications network, especially of the core network, such as information, e.g., on tariff details, eligible services, user's devices.

In conventionally known telecommunications networks, the security procedures and authentication protocols that are provided by the universal integrated circuit card entity and used in the context of EAP_AKA are typically used mainly to identify the SIM card (or universal integrated circuit card entity) in the mobile device or user equipment. The entitlement configuration server entity is able to authenticate a SIM card and to hand out an authentication token (authentication_token) to the user equipment, as defined in TS.43. This authentication token can be used for any operation on the entitlement configuration server entity; hence, this authentication token should not be made available indiscriminately and an access to this authentication token should indeed be restricted. However, in conventionally known telecommunications networks, the access to such EAP_AKA mechanisms and associated tokens or token information on such a device is very tightly restricted by the operating system, and, especially, a general or non-privileged application (e.g. one that is able to be downloaded from an application store or an application distribution entity, and installed on the respective device or user equipment, especially by a user thereof) is unable to use or to access the security procedures provided by the universal integrated circuit card entity.

According to the present invention, an authentication of a general or non-privileged application is possible. Such a general or non-privileged application is typically running on or is executed by the user equipment, especially its operating system. The user equipment itself is used with a telecommunications network that comprises the entitlement configuration server entity and that comprises or is associated with (or is able to access) the resource server entity that is typically associated with (or works with or provides at least part of the services of) the general or non-privileged application. The user equipment comprises its universal integrated circuit card entity which provides security procedures that are used when an authentication of the user equipment (or, rather, its universal integrated circuit card entity) is required with the telecommunications network.

In order to be able to use this established trust - between the user equipment or mobile device on the one hand, and the telecommunications network on the other hand - also for the general or non-privileged application (and especially despite an access to a (main) authentication token being refused to the general or non-privileged application), a leveled mechanism is provided, according to the present invention, to use this established trust relationship also for the benefit of the general or non-privileged application by means of using a privileged application or functionality: The user equipment comprises the privileged application or functionality. This might mean, according to an embodiment of the present invention, that the privileged application or functionality is able to be installed on the user equipment (either by, or triggered by, its user, or, alternatively, by the network operator of the telecommunications network used (e.g. using over the air transmission mechanisms), especially in case that the user is not allowed to directly install the privileged application or functionality); alternatively (or cumulatively) this might mean, according to an embodiment of the present invention, that the privileged application or functionality is, at least partly, already part of (or installed on) the user equipment, especially by means of an operator provisioning scheme regarding the respective user equipment.

Besides the user equipment comprising the privileged application or functionality, the privileged application or functionality is able, according to the present invention, to access the security procedures of the universal integrated circuit card entity. In order to authenticate the general or non-privileged application towards the resource server entity, the method comprises the steps of:
-- in a first step, the user equipment performs or conducts an extensible authentication protocol, EAP, and/or an enhanced authentication and key agreement, AKA, with respect to, or towards, the entitlement configuration server entity, resulting in the privileged application or functionality receiving or comprising a first token information,
-- in a second step, the user equipment requests, from the entitlement configuration server entity, a second token information, resulting in the second token information being received by the user equipment, the second token information being based on the first token information and provided to the general or non-privileged application,
-- in a third step, the general or non-privileged application uses the second token information to authenticate itself at, or towards, the resource server entity.

According to the present invention, it is advantageously possible and preferred that, in a fourth step, subsequent to the first step and prior to the second step, the user equipment requests, from the entitlement configuration server entity, a temporary token information, resulting in the temporary token information being received by the user equipment, the temporary token information being based on the first token information, wherein, in the second step, the second token information is based on the temporary token information.

It is thereby advantageously possible to easily establish an authenticated communication link between the user equipment, or, rather, the general or non-privileged application and the resource server entity in a secure manner.

According to the present invention, it is furthermore advantageously possible and preferred that, in a fifth step, prior to the first step, the entitlement configuration server entity and the resource server entity perform a message exchange for, or in view of, the validation of the second token information.

Thereby, it is comparatively easily possible to effectively implement the inventive concept and especially the inventive method according to the present invention.

According to the present invention, it is furthermore advantageously possible and preferred that the privileged application or functionality corresponds to at least one out of the following:
-- a functionality or a software module or part of the operating system of the user equipment,
-- an application running on or being executed by the operating system of the user equipment, especially a carrier application or a carrier-related application or operator application or operator-related application.

It is thereby advantageously possible to realize and implement the inventive method in a comparatively simple and efficient manner.

According to the present invention, it is furthermore advantageously possible and preferred that performing the first and/or the second step involves using a specific application characteristic identifier, APPID, related to providing the general or non-privileged application with authentication functionalities, wherein the specific application characteristic identifier especially corresponds to an entry of the open mobile alliance device management, DM, application characteristic, AC, registry.

According to the present invention, it is furthermore advantageously possible and preferred that the general or non-privileged application corresponds to a third party application, and wherein the resource server entity corresponds to the backend of the general or non-privileged application, wherein especially the general or non-privileged application triggers at, or requests from, the privileged application or functionality to perform the first step and/or the second step,
wherein especially in order for the general or non-privileged application to authenticate itself at, or towards, the resource server entity the second token information is exclusively used, especially no further credentials are required to be provided by a user of the user equipment or of the general or non-privileged application.

It is thereby advantageously possible to realize and implement the inventive method in a comparatively simple and efficient manner.

According to the present invention, it is furthermore advantageously possible and preferred that the second token information comprises, especially in encrypted form, information that is able to be decrypted by the resource server entity to identify, in the third step, the general or non-privileged application or the instance of the general or non-privileged application used on the user equipment.

It is thereby advantageously possible to realize and implement the inventive method in a comparatively simple and efficient manner.

According to the present invention, it is furthermore advantageously possible and preferred that the user equipment supports TS.43 entitlement procedures and/or wherein the universal integrated circuit card corresponds to at least one out of the following:
-- an embedded universal integrated circuit card or embedded subscriber identity module,
-- a physical universal integrated circuit card or a physical subscriber identity module.

The present invention furthermore also relates to a user equipment for authenticating a general or non-privileged application that is running on or executed by the user equipment, wherein the user equipment is used with a telecommunications network, wherein the telecommunications network comprises an entitlement configuration server entity and wherein the telecommunications network comprises or is associated with or is able to access a resource server entity,
wherein the user equipment comprises a universal integrated circuit card entity as well as runs or executes an operating system, wherein the universal integrated circuit card entity provides security procedures, and wherein the user equipment comprises a privileged application or functionality that is able to access the security procedures of the universal integrated circuit card entity,
wherein, in order to authenticate the general or non-privileged application towards the resource server entity, the user equipment is configured such that:
   -- the user equipment performs or conducts an extensible authentication protocol, EAP, and/or an enhanced authentication and key agreement, AKA, with respect to, or towards, the entitlement configuration server entity, resulting in the privileged application or functionality receiving or comprising a first token information,
   -- the user equipment requests, from the entitlement configuration server entity, a second token information, resulting in the second token information being received by the user equipment, the second token information being based on the first token information and provided to the general or non-privileged application,
   -- the general or non-privileged application uses the second token information to authenticate itself at, or towards, the resource server entity.

Furthermore, the present invention relates to a system or to a telecommunications network or to a resource server entity for authenticating a general or non-privileged application that is running on or executed by a user equipment, wherein the user equipment is used with the telecommunications network, wherein the telecommunications network comprises an entitlement configuration server entity and
wherein the telecommunications network comprises or is associated with or is able to access the resource server entity,
wherein the user equipment comprises a universal integrated circuit card entity and a privileged application or functionality, wherein, in order to authenticate the general or non-privileged application towards the resource server entity, the system or telecommunications network or resource server entity is configured such that:
   -- the entitlement configuration server entity performs or conducts an extensible authentication protocol, EAP, and/or an enhanced authentication and key agreement, AKA, with respect to, or towards, the user equipment, resulting in the user equipment, and especially the privileged application or functionality, receiving or comprising a first token information,
   -- upon a request from the user equipment, the entitlement configuration server entity transmits a second token information to the user equipment, the second token information being based on the first token information and is especially provided to the general or non-privileged application,
   -- the resource server entity is able to authenticate the general or non-privileged application based on receiving the second token information.

Additionally, the present invention relates to an entitlement configuration server entity or to a resource server entity, provided to be used as part of an inventive system or as part of an inventive telecommunications network.

Additionally, the present invention relates to a program comprising a computer readable program code which, when executed on a computer and/or on a user equipment and/or on a network node of a telecommunications network, especially an entitlement configuration server entity and/or a resource server entity, or in part on the user equipment and/or in part on the network node of the telecommunications network, especially the entitlement configuration server entity and/or the resource server entity, causes the computer and/or the user equipment and/or the network node of the telecommunications network to perform the inventive method.

Still additionally, the present invention relates to a computer-readable medium comprising instructions which when executed on a computer and/or on a user equipment and/or on a network node of a telecommunications network, especially an entitlement configuration server entity and/or a resource server entity, or in part on the user equipment and/or in part on the network node of the telecommunications network, especially the entitlement configuration server entity and/or the resource server entity, causes the computer and/or the user equipment and/or the network node of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

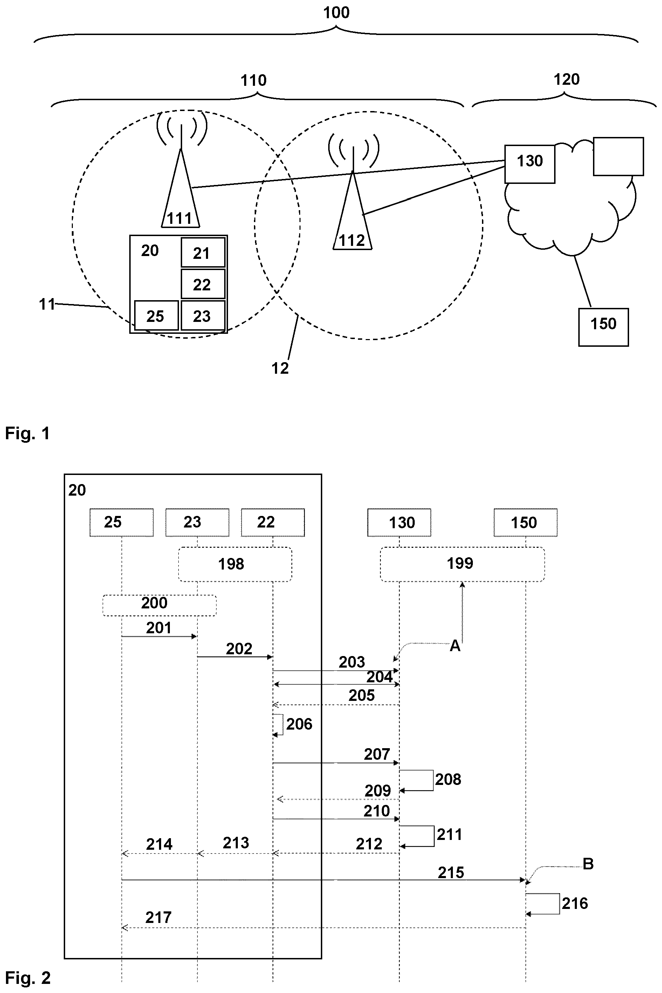

Figure 1 schematically illustrates a telecommunications network, especially a mobile communication network, comprising an access network, and a core network with a user equipment being connected to the telecommunications network, wherein for authenticating a general or non-privileged application - running on or being executed by the user equipment - security procedures are used that are provided by the universal integrated circuit card entity.
Figure 2 schematically illustrates an exemplary communication diagram between components of the user equipment, the entitlement configuration server entity, and the resource server entity.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 is schematically shown, the telecommunications network 100 comprising an access network 110, and a core network 120. Furthermore, a user equipment 20 is connected to the telecommunications network 100. The telecommunications network 100 is especially realized as a mobile (cellular) communication network 100 (and is, hereinafter and at least partly, also called like this). The telecommunications network 100, especially the core network 120, typically comprises a number of network functions or services, wherein of these, Figure 1 exemplarily shows an entitlement configuration server entity 130.

The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 is connected to the telecommunications network 100 via a radio interface to the first base station entity 111. The user equipment 20 is typically, but not necessarily, mobile - i.e. able to move - with respect to the - typically, but not necessarily, static - radio cells 11, 12 or corresponding base station entities 111, 112 of the access network 110.

The telecommunications network 100 either comprises or it is associated with (or is able to access) a resource server entity 150 that interacts with or is related with an application, especially a general or non-privileged application 25 as part of, or being installed on, the user equipment 20. In Figure 1, the resource server entity 150 is represented as somehow external to at least the central parts of the core network 120; however, the resource server entity 150 might be located or realized either as an integrated part of the core network 120, or, alternatively, be located or realized (completely) external to the core network 120.

The user equipment 20 additionally comprises a subscriber identity module card or SIM card or universal integrated circuit card entity 21 as well as runs or executes an operating system 22.

The subscriber identity module card or SIM card or universal integrated circuit card entity 21 is typically an integrated circuit that is intended to securely store an identity of or associated or assigned to the user equipment 20, especially the international mobile subscriber identity, IMSI, number or information and/or a mobile customer identity information and/or a unique serial number (integrated circuit card identifier or ICCID). The subscriber identity module can also be realized as or is able to comprise a universal integrated circuit card (UICC) physical smart card and/or an embedded subscriber identity module, eSIM. Alternatively, the universal integrated circuit card entity 21 might also be realized as an integrated SIM, iSIM, that might also be called a nuSIM (especially in view of providing the possibility to allow for smaller devices and/or internet-of-things devices to have universal integrated circuit card functionalities): such an iSIM or nuSIM is typically realized in form of a system that is fully integrated into a security enclave of a system on chip, SoC; it is thereby advantageously possible to provide for a smaller, cheaper and more eco-friendly realization of the functionalities of the universal integrated circuit card entity 21 since no extra hardware and plastic is required, and the same security requirements as a conventionally known universal integrated circuit card entity are able to be fulfilled. In the following, all such variants are mainly referred to by the term universal integrated circuit card entity 21.

The universal integrated circuit card entity 21 provides security procedures, and the user equipment 20 comprises - in addition to the general or non-privileged application 25 -, either as part of the operating system 22 or as a standalone application or software entity or module, a privileged application or functionality 23 that is able to access the security procedures of the universal integrated circuit card entity 21.

The general or non-privileged application 25 typically runs on the user equipment 20, i.e. the user equipment 20 typically runs or executes the operating system 22 (such as a mobile (devices) operating system, e.g., android, iOS, iPadOS, etc.), and the general or non-privileged application 25 is running on the operating system. The privileged application or functionality 23 is typically a lower level application (compared to the general or non-privileged application 25) that is either also running on the operating system 22, or, alternatively (and/or partly cumulatively), the privileged application or functionality 23 might not be running on or as part of the operating system 22 but on or as part of (at least partly), e.g. the subscriber identity module or universal integrated circuit card entity 21 of the user equipment 20.

According to the present invention, in order to authenticate the general or non-privileged application 25 towards the resource server entity 150, the user equipment 20 first performs or conducts an extensible authentication protocol, EAP, and/or an enhanced authentication and key agreement, AKA, with respect to, or towards, the entitlement configuration server entity 130, resulting in the privileged application or functionality 23 receiving or comprising a first token information. Thereafter, the user equipment 20 requests, from the entitlement configuration server entity 130, a second token information, resulting in the second token information being received by the user equipment 20, the second token information being based on the first token information and provided to the general or non-privileged application 25. Based on the general or non-privileged application 25 being provided with the second token information, the general or non-privileged application 25 is able to us the second token information to authenticate itself at, or towards, the resource server entity 150. This corresponds to the most basic realization according to the present invention.

According to further variants or embodiments of the present invention, in a fourth step, subsequent to the first step and prior to the second step, the user equipment 20 requests, from the entitlement configuration server entity 130, a temporary token information, resulting in the temporary token information being received by the user equipment 20, the temporary token information being based on the first token information, wherein, in the second step, the second token information is based on the temporary token information.

In the following and in the context of the present invention, the first token information is also called the device token or device token information, and the second token information is also called the operator token or operator token information. It is by means of the second token information (or, the operator token information) that the general or non-privileged application 25 is able to authenticate with regard to the resource server entity 150.

According to the present invention, the device token information (or first token information) especially identifies the subscriber (i.e. the user equipment and/or its user) and the device; this typically corresponds to a comparatively long-lived token information, i.e. having a comparatively large expiration time or expiration time interval. Furthermore, the operator token information (or second token information) especially provides carrier-specific data to the resource server entity 150. The temporary token information is especially only used by the operating system 22, especially in order to identify the device, i.e. the user equipment, and its user.

In Figure 2, an exemplary communication diagram between components of the user equipment 20, the entitlement configuration server entity 130, and the resource server entity 150 is schematically shown. The user equipment 20 comprises (or runs or executes) the operating system 22, the privileged application or functionality 23 as well as the general or non-privileged application 25 that is to be authenticated towards the resource server entity 150.

In a first preliminary processing step 198, the privileged application or functionality 23 is authorized to call operating system calls or privileged application programming interfaces. Furthermore, in a second preliminary processing step 199, an exchange of information for operator token validation is performed.

Furthermore, in a third preliminary processing step 200, the general or non-privileged application 25 is authorized to call the privileged application or functionality 23.

In a first processing step 201, the general or non-privileged application 25 fetches or requests to be provided an operator token (or an operator token information, i.e. the second token information. In a second processing step 202, the privileged application or functionality 23 likewise fetches the operator token or second token information (or an operator token that is able to be used for authentication purposes of the general or non-privileged application 25), i.e. it forwards this request to the operating system 22. Thereafter, in a third processing step 203, the operating system 22 - i.e. the user equipment 20 - fetches the first token information, i.e. requests the first token information, from the content entitlement configuration server entity 130 as a preparatory step in view of providing the requested operator (or second) token information. In a fourth processing step 204, an extensible authentication protocol, EAP, and/or an enhanced authentication and key agreement, AKA, process is performed or conducted between the user equipment 20 (i.e. its operating system 22) and the entitlement configuration server entity 130. In a fifth processing step 205, the first token information (device token) is transmitted, by the entitlement configuration server entity 130, to the user equipment 20 (and the user equipment 20 receives the first token information). The third, fourth and fifth processing steps 203, 204, 205 correspond to the first step of the inventive method according to the present invention, resulting in the privileged application or functionality 23 (or the operating system 22) receiving or comprising a first token information.

In a sixth processing step 206, the operating system 22 securely stores the first token information (device token). In a seventh processing step 207, the operating system (or the privileged application or functionality 23) fetches the temporary token information based on the first (or device) token information, i.e. the operating system 22 (or the privileged application or functionality 23) requests from the entitlement configuration server entity 130 to be provided with the temporary token information and transmits, as an authentication information, the first token information or device token. In an eighth processing step 208, the entitlement configuration server entity 130 validates the device token (or first token information), received from the user equipment 20 (or operating system 22 or privileged application or functionality 23 thereof). In a ninth processing step 209, the temporary token information is transmitted, by the entitlement configuration server entity 130, to the user equipment 20 (or operating system 22 or privileged application or functionality 23 thereof) and the user equipment 20 receives the temporary token information. In a tenth processing step 210, the operating system (or the privileged application or functionality 23) fetches the second (or operator) token information based on the temporary token information (and, as the temporary token information is based on the first (or device) token information, also based on the first token information), i.e. the operating system 22 (or the privileged application or functionality 23) requests from the entitlement configuration server entity 130 to be provided with the second (or operator) token information and transmits, as an authentication information, the temporary token information. In an eleventh processing step 211, the entitlement configuration server entity 130 validates the temporary token, received from the user equipment 20 (or operating system 22 or privileged application or functionality 23 thereof). In a twelfth processing step 212, the operator (or second) token information is transmitted, by the entitlement configuration server entity 130, to the user equipment 20 (or operating system 22 or privileged application or functionality 23 thereof), especially, in a thirteenth processing step 213 to the privileged application or functionality 23, and in a fourteenth processing step 214 to the general or non-privileged application 25, thereby answering or providing a response to the request (to provide the operator token information) of the first processing step 201.

The tenth, eleventh, twelfth, thirteenth, and fourteenth processing steps 210, 211, 212, 213, 214 correspond to the second step of the inventive method according to the present invention, resulting in the second (or operator) token information being transmitted, by the entitlement configuration server entity 130, to be received by the user equipment 20, the second token information being based on (the temporary token information that is itself based on) the first (or device) token information and provided to the general or non-privileged application 25.

In a fifteenth processing step 215, the general or non-privileged application 25 consumes the backend service from the resource server entity 150, e.g. by means of a request (message) comprising the second (or operator) token information. In a sixteenth processing step 216, the resource server entity 150 validates the second (or operator) token information, and in a seventeenth processing step 217, the resource server entity 150 provides the service response to the user equipment 20, especially to the general or non-privileged application 25. Hence, by means of the fifteenth, sixteenth and seventeenth processing steps 215, 216, 217, the general or non-privileged application 25 uses (especially by means of using a backend application programming interface of the resource server entity 150, schematically indicated, in Figure 2, by means of reference sign B) the second token information to authenticate itself at, or towards, the resource server entity 150, and thereby realizes the third step of the inventive method.

According to the present invention, it is preferred that, in a fifth step (of the inventive method), prior to the first step (of the inventive method), the entitlement configuration server entity 130 and the resource server entity 150 perform a message exchange for, or in view of, the validation of the second (i.e. the operator) token information. This corresponds to the second preliminary processing step 199, and, together with first requesting the first (or device) token information (in the third, fourth and fifth processing steps 203, 204, 205) links (indicated, in Figure 2, by means of reference sign A) the conventionally known authentication mechanism (of the user equipment 20 or of its universal integrated circuit card 21 with the telecommunications network 100) with the authentication of the general or non-privileged application 25 towards the resource server entity 150 according to the present invention.

Hence, according to the present invention a mechanism is provided to authenticate an application, especially a general or non-privileged application 25, especially leveraging the TS.43 EAP_AKA trust while maintaining a tight level of security. With regard to Figure 2, the differentiation shown between the operating system (or: "OS-Functions") 22 and the privileged application or functionality (or: "privileged App") 23 is implementation specific. The privileged App (or privileged application or functionality 23) is authorized to call the operating system functions, so the arrows (shown in Figure 2) might as well originate and end at the privileged application or functionality ("privileged App") 23.

According to the present invention, it is, of course, a prerequisite that the user equipment 20 or mobile device supports TS.43 entitlement procedures; furthermore, it is a requirement that the privileged application or functionality 23 - or a privileged app - is operational or operative on the user equipment 20 or mobile device, this privileged application or functionality 23 having access to privileged operating system functions like TS.43 entitlement and EAP_AKA (which operating system functions are typically restricted. Another requirement is that the mobile network operator (MNO) operates an entitlement server or entitlement configuration server entity 130 supporting TS.43 procedures. In case that a third-party app (or general or non-privileged application 25) on the device or user equipment 20 has an equivalent backend server entity (i.e. the resource server entity 150, i.e. of the third-party application (general or non-privileged application 25)) that knows the entitlement server (or entitlement configuration server entity 130) of the mobile network operator or of the mobile communication network 100, it is possible that the resource server entity 150 has a preexisting exchange of information to authenticate an operator token (or second token information). Then, an authentication flow as follows is able to be realized according to the present invention:

The flow is triggered when the third party application (general or non-privileged application 25) requests SIM based authentication in the form of an operator token (i.e. second token information). For that it triggers the privileged app (privileged application or functionality 23) on the device or user equipment 20, which has access to restricted operating system functions (i.e. function of the operating system 22).

The mobile device or user equipment 20 then makes an initial request at the operator's entitlement server (entitlement configuration server entity 130), for which especially the TS.43 defined EAP_AKA flow is able to be used. If this was successful, the entitlement configuration server entity 130 hands out (i.e. transmits) a device token (or first token information), which is securely stored on the device or user equipment 20. The device token (or first token information) is based on the SIM (or universal integrated circuit card entity 21) and the device or user equipment 20, so it identifies and authenticates the subscriber and the device.

Using this (device or second) token (information), the device or user equipment 20 is able to query another token (temporary token information), that can later be used to gain the operator token (i.e. the second token information). TS.43 offers the mechanism of a temporary_token, which can be used here. The temporary_token is a single use token, bound to a specific operation. I this case the operation would have to be a newly defined one, e.g. AcquireOperatorToken.

The call could look like this:

```
 GET ? terminal_id = 123456 &
 terminal _iccid = 12345 &
 App=ap2999 (new App-ID to indicate "OperatorToken" Use Case in TS43) &
 operation = AcquireTemporaryToken &
 operation_targets = AcquireOperatorToken (new operation) &
 token = 'DeviceToken' &
 terminal _vendor = 'vendor' &
 terminal _model = 'model' &
 terminal _sw_version = 'swvers' &
 entitlement _version = 'evers'
```

The entitlement configuration server entity 130 checks if the request and the option is valid, and, if successful, hands out the temporary token to the device or user equipment 20.

This temporary token (information) is then used by the device or user equipment 20 to query the entitlement configuration server entity 130, requesting an operator token (i.e. the second token information).

The request could look like this:

```
 GET ? terminal _id = 123456 &
 terminal_iccid = 12345 &
 [... other identifiers ...]
 App=ap2999 (new App-ID to indicate "OperatorToken" Use Case in TS43) &
 operation = AcquireOperatorToken &
 temporary_token = 'temporarytoken'
```

It is especially preferred to also include another field here to identify the requesting application. This able to be done in an additional field, e.g. requesting_application, or in a HTTP-header, like the already existent user-agent header.

The entitlement server (or entitlement configuration server entity 130) then checks the request, including the temporary_token, and creates an operator-token (i.e. the second token information) if everything is correct. In the operator-token. the entitlement configuration server entity 130 encrypts information that can later be decrypted by the resource server (or resource server entity 150) to identify the user (equipment) or the general or non-privileged application 25. This requires the precondition that the entitlement configuration server entity 130 and the resource server entity 150 made an agreement on the encryption, e.g. pre-shared keys, e.g. according to a request such as:

```
 POST /oauth/client_credentials/accesstoken
 Content-Type: application/x-www-form-urlencoded
 
```

Body:

```
client_id=<app_id>&
 client _secret=<carriertoken>&
 grant_type=client_credentials&
 scope=msisdn imsi psi
 
```

Response:

{

```
 "operator_token":"b64(<temporary_token>)",
 "token_type" : "bearer",
 "expires_in":"3600" ,
 "scope":"msisdn imsi",
 "id" : "abcd1234"
 }
```

Using this operator token (information) - or second token information - the general or non-privileged application 25 can now authenticate against its own backend system 150. The backend system 150 (or resource server entity 150) decrypts the operator token information and the user and/or user equipment 20 is authenticated and verified. As the user is already identified and verified with the information stored in the operator token, there is no need for the user to authenticate again, e.g. using user credentials: i.e. no login page with username/password is required, and the user can instantly start using the service.

## Claims

1. Method for authenticating a general or non-privileged application (25) that is running on or is executed by a user equipment (20), wherein the user equipment (20) is used with a telecommunications network (100), wherein the telecommunications network (100) comprises an entitlement configuration server entity (130) and wherein the telecommunications network (100) comprises or is associated with or is able to access a resource server entity (150),
wherein the user equipment (20) comprises a universal integrated circuit card entity (21) as well as runs or executes an operating system (22), wherein the universal integrated circuit card entity (21) provides security procedures, and wherein the user equipment (20) comprises a privileged application or functionality (23) that is able to access the security procedures of the universal integrated circuit card entity (21), wherein, in order to authenticate the general or non-privileged application (25) towards the resource server entity (150), the method comprises the following steps:
-- in a first step, the user equipment (20) performs or conducts an extensible authentication protocol, EAP, and/or an enhanced authentication and key agreement, AKA, with respect to, or towards, the entitlement configuration server entity (130), resulting in the privileged application or functionality (23) receiving or comprising a first token information,
-- in a second step, the user equipment (20) requests, from the entitlement configuration server entity (130), a second token information, resulting in the second token information being received by the user equipment (20), the second token information being based on the first token information and provided to the general or non-privileged application (25), -- in a third step, the general or non-privileged application (25) uses the second token information to authenticate itself at, or towards, the resource server entity (150), wherein the second token information comprises, in encrypted form, information that is able to be decrypted by the resource server entity (150) to identify, the general or non-privileged application (25), wherein, in a fifth step, prior to the first step, the entitlement configuration server entity (130) and the resource server entity (150) perform a message exchange for, or in view of, the validation of the second token information,
wherein the general or non-privileged application (25) triggers at, the privileged application or functionality (23), to perform the first step.

2. Method according to claim 1, wherein, in a fourth step, subsequent to the first step and prior to the second step, the user equipment (20) requests, from the entitlement configuration server entity (130), a temporary token information, resulting in the temporary token information being received by the user equipment (20), the temporary token information being based on the first token information, wherein, in the second step, the second token information is based on the temporary token information.

3. Method according to one of the preceding claims, wherein the privileged application or functionality (23) corresponds to at least one out of the following:
-- a functionality or a software module or part of the operating system (22) of the user equipment (20),
-- an application running on or being executed by the operating system (22) of the user equipment (20), especially a carrier application or a carrier-related application or operator application or operator-related application.

4. Method according to one of the preceding claims, wherein performing the first and/or the second step involves using a specific application characteristic identifier, APPID, related to providing the general or non-privileged application (25) with authentication functionalities, wherein the specific application characteristic identifier especially corresponds to an entry of the open mobile alliance device management, DM, application characteristic, AC, registry.

5. Method according to one of the preceding claims, wherein the general or non-privileged application (25) corresponds to a third party application, and wherein the resource server entity (150) corresponds to the backend of the general or non-privileged application (25).

6. Method according to one of the preceding claims, wherein the user equipment (20) supports GSMA TS.43 entitlement procedures and/or wherein the universal integrated circuit card (21) corresponds to at least one out of the following:
-- an embedded universal integrated circuit card or embedded subscriber identity module,
-- a physical universal integrated circuit card or a physical subscriber identity module.

7. System or telecommunications network (100) for authenticating a general or non-privileged application (25) that is running on or executed by a user equipment (20),
wherein the user equipment (20) is used with and comprised in the system or the telecommunications network (100), wherein the system or telecommunications network (100) comprises an entitlement configuration server entity (130) and wherein the system or telecommunications network (100) comprises a resource server entity (150),
wherein the user equipment (20) comprises a universal integrated circuit card entity (21) and a privileged application or functionality (23),
wherein, in order to authenticate the general or non-privileged application (25) towards the resource server entity (150), the system or telecommunications network (100) is configured such that:
-- the entitlement configuration server entity (130) performs or conducts an extensible authentication protocol, EAP, and/or an enhanced authentication and key agreement, AKA, with respect to, or towards, the user equipment (20), resulting in the user equipment (20), and thereby the privileged application or functionality (23), receiving or comprising a first token information,
-- upon a request from the user equipment (20), the entitlement configuration server entity (130) transmits a second token information to the user equipment (20), the second token information being based on the first token information and is provided to the general or non-privileged application (25),
-- the resource server entity (150) is able to authenticate the general or non-privileged application (25) based on receiving the second token information, wherein the second token information comprises, in encrypted form, information that is able to be decrypted by the resource server entity (150) to identify, the general or non-privileged application (25),
wherein , before the entitlement configuration server entity (130) performs or conducts said extensible authentication protocol, EAP,
and/or said enhanced authentication and key agreement, AKA, the entitlement configuration server entity (130) and the resource server entity (150) perform a message exchange for, or in view of, the validation of the second token information,
wherein the general or non-privileged application (25) triggers at, the privileged application or functionality (23), to perform the first step.

8. User equipment (20), provided to be used as part of a system or of a telecommunications network (100) according to claim 7, wherein the User equipment is configured to perform the respective method steps according to claim 1.

9. Program comprising a computer readable program code which, when executed in part on the user equipment (20) and in part on the entitlement configuration server entity (130) and the resource server entity (150), causes the user equipment (20), the entitlement configuration server entity (130) and the resource server entity (150) to perform a method according one of claims 1 to 6.

10. Computer-readable medium comprising instructions which when executed in part on the user equipment (20) and in part on the entitlement configuration server entity (130) and the resource server entity (150), causes the user equipment (20), the entitlement configuration server entity (130) and the resource server entity (150) to perform a method according one of claims 1 to 6.

## Patentansprüche

1. Verfahren zur Authentifizierung einer allgemeinen oder nicht-privilegierten Anwendung (25), die auf einem Benutzergerät (20) läuft oder von diesem ausgeführt wird, wobei das Benutzergerät (20) mit einem Telekommunikationsnetz (100) verwendet wird, wobei das Telekommunikationsnetz (100) eine Berechtigungskonfigurationsserver-Entität (130) umfasst und wobei das Telekommunikationsnetz (100) eine Ressourcenserver-Entität (150) umfasst oder mit dieser verbunden ist oder auf diese zugreifen kann, wobei das Benutzergerät (20) eine Universal-Chipkarten-Entität (21) umfasst sowie ein Betriebssystem (22) ausführt oder betreibt, wobei die Universal-Chipkarten-Entität (21) Sicherheitsverfahren bereitstellt, und wobei das Benutzergerät (20) eine privilegierte Anwendung oder Funktionalität (23) umfasst, die auf die Sicherheitsverfahren der Universal-Chipkarten-Entität (21) zugreifen kann, wobei das Verfahren, um die allgemeine oder nicht-privilegierte Anwendung (25) gegenüber der Ressourcenserver-Entität (150) zu authentifizieren, die folgenden Schritte umfasst:
-- in einem ersten Schritt führt das Benutzergerät (20) ein erweiterbares Authentifizierungsprotokoll, EAP, und/oder ein erweitertes Authentifizierungs- und Schlüsselvereinbarungsverfahren, AKA, in Bezug auf oder gegenüber der Berechtigungskonfigurationsserver-Entität (130) durch oder aus, was dazu führt, dass die privilegierte Anwendung oder Funktionalität (23) eine erste Token-Information empfängt oder umfasst,
-- in einem zweiten Schritt fordert das Benutzergerät (20) von der Berechtigungskonfigurationsserver-Entität (130) eine zweite Token-Information an, was dazu führt, dass die zweite Token-Information vom Benutzergerät (20) empfangen wird, wobei die zweite Token-Information auf der ersten Token-Information basiert und der allgemeinen oder nicht-privilegierten Anwendung (25) bereitgestellt wird,
-- in einem dritten Schritt verwendet die allgemeine oder nicht-privilegierte Anwendung (25) die zweite Token-Information, um sich bei oder gegenüber der Ressourcenserver-Entität (150) zu authentifizieren, wobei die zweite Token-Information in verschlüsselter Form Informationen umfasst, die von der Ressourcenserver-Entität (150) entschlüsselt werden können, um die allgemeine oder nicht-privilegierte Anwendung (25) zu identifizieren, wobei in einem fünften Schritt, vor dem ersten Schritt, die Berechtigungskonfigurationsserver-Entität (130) und die Ressourcenserver-Entität (150) einen Nachrichtenaustausch für oder im Hinblick auf die Validierung der zweiten Token-Information durchführen, wobei die allgemeine oder nicht-privilegierte Anwendung (25) bei der privilegierten Anwendung oder Funktionalität (23) auslöst, den ersten Schritt durchzuführen.

2. Verfahren nach Anspruch 1, wobei in einem vierten Schritt, nachfolgend auf den ersten Schritt und vor dem zweiten Schritt, das Benutzergerät (20) von der Berechtigungskonfigurationsserver-Entität (130) eine temporäre Token-Information anfordert, was dazu führt, dass die temporäre Token-Information vom Benutzergerät (20) empfangen wird, wobei die temporäre Token-Information auf der ersten Token-Information basiert, wobei im zweiten Schritt die zweite Token-Information auf der temporären Token-Information basiert.

3. Verfahren nach einem der vorhergehenden Ansprüche, wobei die privilegierte Anwendung oder Funktionalität (23) mindestens einem der Folgenden entspricht:
-- einer Funktionalität oder einem Softwaremodul oder einem Teil des Betriebssystems (22) des Benutzergeräts (20),
-- einer Anwendung, die auf dem Betriebssystem (22) des Benutzergeräts (20) läuft oder von diesem ausgeführt wird, insbesondere einer Carrier-Anwendung oder einer Carrier-bezogenen Anwendung oder Betreiberanwendung oder Betreiber-bezogenen Anwendung.

4. Verfahren nach einem der vorhergehenden Ansprüche, wobei die Durchführung des ersten und/oder des zweiten Schritts die Verwendung eines spezifischen Anwendungscharakteristik-Identifikators, APPID, beinhaltet, der sich auf die Bereitstellung von Authentifizierungs-Funktionalitäten für die allgemeine oder nicht-privilegierte Anwendung (25) bezieht, wobei der spezifische Anwendungscharakteristik-Identifikator insbesondere einem Eintrag des Registers der Anwendungscharakteristik, AC, der Geräteverwaltung der Open Mobile Alliance, DM, entspricht.

5. Verfahren nach einem der vorhergehenden Ansprüche, wobei die allgemeine oder nicht-privilegierte Anwendung (25) einer Drittanbieteranwendung entspricht, und wobei die Ressourcenserver-Entität (150) dem Backend der allgemeinen oder nicht-privilegierten Anwendung (25) entspricht.

6. Verfahren nach einem der vorhergehenden Ansprüche, wobei das Benutzergerät (20) GSMA TS.43 Berechtigungsverfahren unterstützt und/oder wobei die Universal-Chipkarte (21) mindestens einem der Folgenden entspricht:
-- einer eingebetteten Universal-Chipkarte oder einem eingebetteten Teilnehmeridentitätsmodul,
-- einer physischen Universal-Chipkarte oder einem physischen Teilnehmeridentitätsmodul.

7. System oder Telekommunikationsnetz (100) zur Authentifizierung einer allgemeinen oder nicht-privilegierten Anwendung (25), die auf einem Benutzergerät (20) läuft oder von diesem ausgeführt wird, wobei das Benutzergerät (20) mit dem System oder dem Telekommunikationsnetz (100) verwendet wird und darin umfasst ist, wobei das System oder Telekommunikationsnetz (100) eine Berechtigungskonfigurationsserver-Entität (130) umfasst und wobei das System oder Telekommunikationsnetz (100) eine Ressourcenserver-Entität (150) umfasst, wobei das Benutzergerät (20) eine Universal-Chipkarten-Entität (21) und eine privilegierte Anwendung oder Funktionalität (23) umfasst, wobei das System oder Telekommunikationsnetz (100), um die allgemeine oder nicht-privilegierte Anwendung (25) gegenüber der Ressourcenserver-Entität (150) zu authentifizieren, so konfiguriert ist, dass:
-- die Berechtigungskonfigurationsserver-Entität (130) ein erweiterbares Authentifizierungsprotokoll, EAP, und/oder ein erweitertes Authentifizierungs- und Schlüsselvereinbarungsverfahren, AKA, in Bezug auf oder gegenüber dem Benutzergerät (20) durchführt oder ausführt, was dazu führt, dass das Benutzergerät (20) und dadurch die privilegierte Anwendung oder Funktionalität (23) eine erste Token-Information empfängt oder umfasst,
-- auf eine Anforderung vom Benutzergerät (20) hin überträgt die Berechtigungskonfigurationsserver-Entität (130) eine zweite Token-Information an das Benutzergerät (20), wobei die zweite Token-Information auf der ersten Token-Information basiert und der allgemeinen oder nicht-privilegierten Anwendung (25) bereitgestellt wird,
-- die Ressourcenserver-Entität (150) in der Lage ist, die allgemeine oder nicht-privilegierte Anwendung (25) basierend auf dem Empfang der zweiten Token-Information zu authentifizieren, wobei die zweite Token-Information in verschlüsselter Form Informationen umfasst, die von der Ressourcenserver-Entität (150) entschlüsselt werden können, um die allgemeine oder nicht-privilegierte Anwendung (25) zu identifizieren, wobei bevor die Berechtigungskonfigurationsserver-Entität (130) das besagte erweiterbare Authentifizierungsprotokoll, EAP, und/oder das besagte erweitertes Authentifizierungs- und Schlüsselvereinbarungsverfahren, AKA, durchführt oder ausführt, die Berechtigungskonfigurationsserver-Entität (130) und die Ressourcenserver-Entität (150) einen Nachrichtenaustausch für oder im Hinblick auf die Validierung der zweiten Token-Information durchführen, wobei die allgemeine oder nicht-privilegierte Anwendung (25) bei der privilegierten Anwendung oder Funktionalität (23) auslöst, den ersten Schritt durchzuführen.

8. Benutzergerät (20), vorgesehen zur Verwendung als Teil eines Systems oder eines Telekommunikationsnetzes (100) nach Anspruch 7, wobei das Benutzergerät konfiguriert ist, die jeweiligen Verfahrensschritte nach Anspruch 1 durchzuführen.

9. Programm, umfassend einen computerlesbaren Programmcode, der, wenn er teilweise auf dem Benutzergerät (20) und teilweise auf der Berechtigungskonfigurationsserver-Entität (130) und der Ressourcenserver-Entität (150) ausgeführt wird, das Benutzergerät (20), die Berechtigungskonfigurationsserver-Entität (130) und die Ressourcenserver-Entität (150) veranlasst, ein Verfahren nach einem der Ansprüche 1 bis 6 durchzuführen.

10. Computerlesbares Medium, umfassend Anweisungen, die, wenn sie teilweise auf dem Benutzergerät (20) und teilweise auf der Berechtigungskonfigurationsserver-Entität (130) und der Ressourcenserver-Entität (150) ausgeführt werden, das Benutzergerät (20), die Berechtigungskonfigurationsserver-Entität (130) und die Ressourcenserver-Entität (150) veranlassen, ein Verfahren nach einem der Ansprüche 1 bis 6 durchzuführen.

## Revendications

1. Procédé d'authentification d'une application générale ou non privilégiée (25) qui est exécutée sur ou par un équipement utilisateur (20), l'équipement utilisateur (20) étant utilisé avec un réseau de télécommunications (100), le réseau de télécommunications (100) comprenant une entité serveur de configuration des droits (130) et le réseau de télécommunications (100) comprenant ou étant associé à ou étant capable d'accéder à une entité serveur de ressources (150), l'équipement utilisateur (20) comprenant une entité carte à circuit intégré universelle (21) ainsi qu'exécutant un système d'exploitation (22), l'entité carte à circuit intégré universelle (21) fournissant des procédures de sécurité, et l'équipement utilisateur (20) comprenant une application privilégiée ou une fonctionnalité (23) qui est capable d'accéder aux procédures de sécurité de l'entité carte à circuit intégré universelle (21), pour authentifier l'application générale ou non privilégiée (25) auprès de l'entité serveur de ressources (150), le procédé comprenant les étapes suivantes :
-- dans une première étape, l'équipement utilisateur (20) exécute ou effectue un protocole d'authentification extensible, EAP, et/ou une authentification et accord de clé améliorés, AKA, par rapport à ou envers l'entité serveur de configuration des droits (130), ce qui a pour résultat que l'application privilégiée ou la fonctionnalité (23) reçoit ou comprend une première information de jeton,
-- dans une deuxième étape, l'équipement utilisateur (20) demande, à l'entité serveur de configuration des droits (130), une deuxième information de jeton, ce qui a pour résultat que la deuxième information de jeton est reçue par l'équipement utilisateur (20), la deuxième information de jeton étant basée sur la première information de jeton et fournie à l'application générale ou non privilégiée (25),
**--** dans une troisième étape, l'application générale ou non privilégiée (25) utilise la deuxième information de jeton pour s'authentifier auprès de ou envers l'entité serveur de ressources (150), la deuxième information de jeton comprenant, sous forme chiffrée, des informations qui peuvent être déchiffrées par l'entité serveur de ressources (150) pour identifier l'application générale ou non privilégiée (25), dans une cinquième étape, avant la première étape, l'entité serveur de configuration des droits (130) et l'entité serveur de ressources (150) effectuant un échange de messages pour ou en vue de la validation de la deuxième information de jeton, l'application générale ou non privilégiée (25) déclenchant, au niveau de l'application privilégiée ou de la fonctionnalité (23), l'exécution de la première étape.

2. Procédé selon la revendication 1, dans lequel, dans une quatrième étape, après la première étape et avant la deuxième étape, l'équipement utilisateur (20) demande, à l'entité serveur de configuration des droits (130), une information de jeton temporaire, ce qui a pour résultat que l'information de jeton temporaire est reçue par l'équipement utilisateur (20), l'information de jeton temporaire étant basée sur la première information de jeton, la deuxième information de jeton étant basée, dans la deuxième étape, sur l'information de jeton temporaire.

3. Procédé selon l'une des revendications précédentes, dans lequel l'application privilégiée ou la fonctionnalité (23) correspond à au moins l'un des éléments suivants :
**--** une fonctionnalité ou un module logiciel ou une partie du système d'exploitation (22) de l'équipement utilisateur (20),
**--** une application s'exécutant sur ou étant exécutée par le système d'exploitation (22) de l'équipement utilisateur (20), en particulier une application de l'opérateur ou une application liée à l'opérateur ou une application de l'opérateur ou une application liée à l'opérateur.

4. Procédé selon l'une des revendications précédentes, dans lequel l'exécution de la première et/ou de la deuxième étape implique l'utilisation d'un identifiant de caractéristique d'application spécifique, APPID, relatif à la fourniture de fonctionnalités d'authentification à l'application générale ou non privilégiée (25), l'identifiant de caractéristique d'application spécifique correspondant en particulier à une entrée du registre de caractéristique d'application, AC, de la gestion des appareils de l'Open Mobile Alliance, DM.

5. Procédé selon l'une des revendications précédentes, dans lequel l'application générale ou non privilégiée (25) correspond à une application tierce, et dans lequel l'entité serveur de ressources (150) correspond au backend de l'application générale ou non privilégiée (25).

6. Procédé selon l'une des revendications précédentes, dans lequel l'équipement utilisateur (20) prend en charge les procédures de droits GSMA TS.43 et/ou dans lequel la carte à circuit intégré universelle (21) correspond à au moins l'un des éléments suivants :
-- une carte à circuit intégré universelle intégrée ou un module d'identité d'abonné intégré,
-- une carte à circuit intégré universelle physique ou un module d'identité d'abonné physique.

7. Système ou réseau de télécommunications (100) pour l'authentification d'une application générale ou non privilégiée (25) qui est exécutée sur ou par un équipement utilisateur (20), l'équipement utilisateur (20) étant utilisé avec et compris dans le système ou le réseau de télécommunications (100), le système ou le réseau de télécommunications (100) comprenant une entité serveur de configuration des droits (130) et le système ou le réseau de télécommunications (100) comprenant une entité serveur de ressources (150), l'équipement utilisateur (20) comprenant une entité carte à circuit intégré universelle (21) et une application privilégiée ou une fonctionnalité (23), pour authentifier l'application générale ou non privilégiée (25) auprès de l'entité serveur de ressources (150), le système ou le réseau de télécommunications (100) étant configuré de telle sorte que :
-- l'entité serveur de configuration des droits (130) exécute ou effectue un protocole d'authentification extensible, EAP, et/ou une authentification et accord de clé améliorés, AKA, par rapport à ou envers l'équipement utilisateur (20), ce qui a pour résultat que l'équipement utilisateur (20), et par conséquent l'application privilégiée ou la fonctionnalité (23), reçoit ou comprend une première information de jeton,
**--** sur demande de l'équipement utilisateur (20), l'entité serveur de configuration des droits (130) transmet une deuxième information de jeton à l'équipement utilisateur (20), la deuxième information de jeton étant basée sur la première information de jeton et étant fournie à l'application générale ou non privilégiée (25),
**--** l'entité serveur de ressources (150) est capable d'authentifier l'application générale ou non privilégiée (25) sur la base de la réception de la deuxième information de jeton, la deuxième information de jeton comprenant, sous forme chiffrée, des informations qui peuvent être déchiffrées par l'entité serveur de ressources (150) pour identifier l'application générale ou non privilégiée (25), avant que l'entité serveur de configuration des droits (130) n'exécute ou n'effectue ledit protocole d'authentification extensible, EAP, et/ou ladite authentification et accord de clé améliorés, AKA, l'entité serveur de configuration des droits (130) et l'entité serveur de ressources (150) effectuant un échange de messages pour ou en vue de la validation de la deuxième information de jeton, l'application générale ou non privilégiée (25) déclenchant, au niveau de l'application privilégiée ou de la fonctionnalité (23), l'exécution de la première étape.

8. Équipement utilisateur (20), prévu pour être utilisé comme partie d'un système ou d'un réseau de télécommunications (100) selon la revendication 7, l'équipement utilisateur étant configuré pour effectuer les étapes de procédé respectives selon la revendication 1.

9. Programme comprenant un code de programme lisible par ordinateur qui, lorsqu'il est exécuté en partie sur l'équipement utilisateur (20) et en partie sur l'entité serveur de configuration des droits (130) et l'entité serveur de ressources (150), amène l'équipement utilisateur (20), l'entité serveur de configuration des droits (130) et l'entité serveur de ressources (150) à effectuer un procédé selon l'une des revendications 1 à 6.

10. Support lisible par ordinateur comprenant des instructions qui, lorsqu'elles sont exécutées en partie sur l'équipement utilisateur (20) et en partie sur l'entité serveur de configuration des droits (130) et l'entité serveur de ressources (150), amènent l'équipement utilisateur (20), l'entité serveur de configuration des droits (130) et l'entité serveur de ressources (150) à effectuer un procédé selon l'une des revendications 1 à 6.
